# EUROPEAN PATENT SPECIFICATION

(11) **EP 2 262 329 B1**
(45) Date of publication and mention of the grant of the patent: **15.01.2014**
(21) Application number: 09290341.8
(22) Date of filing: 11.05.2009
(51) Int. Cl.: H04W 52/02, H04W 4/02, H04W 88/08, H04W 84/04

(54) **Power management system**
Energieverwaltungssystem
Système de gestion d'énergie

(43) Date of publication of application: 15.12.2010
(73) Proprietor: Alcatel Lucent, 75007 Paris (FR)
(72) Inventor: Blume, Oliver, 70499 Stuttgart (DE); Zeller, Dietrich, 71067 Sindelfingen (DE)
(74) Representative: Wetzel, Emmanuelle

(56) References cited:
- WO-A-2008/131588
- WO-A-2008/131591
- MITSUBISHI ELECTRIC: "Dynamic Setup of HNBs for Energy Savings and Interference Reduction" 3GPP DRAFT; R3-081949 (DYNAMIC SETUP HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165010 [retrieved on 2008-08-13]
- MITSUBISHI ELECTRIC: "Dynamic Setup of HNBs" 3GPP DRAFT; R3-080064 (DYNAMIC SETUP HNBS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163298 [retrieved on 2008-02-05]
- "A method for interference control and power saving for home access point" IP.COM JOURNAL, IP.COM INC., WEST HENRIETTA, NY, US, 13 December 2007 (2007-12-13), XP013122942 ISSN: 1533-0001
- ARULSELVAN N ET AL: "Distributed Power Control Mechanisms for HSDPA Femtocells", 2009 IEEE 69TH VEHICULAR TECHNOLOGY CONFERENCE; APRIL 26-29, 2009, BARCELONA, SPAIN, IEEE, PISCATAWAY, NJ, USA, 26 April 2009 (2009-04-26), pages 1-5, XP031474453, ISBN: 978-1-4244-2517-4

## Description

### Technical field

The invention relates to a power management system, a method of operating a power management system and a computer program product.

### Background and related art

Currently, home base stations, also known as femto cells or BSR Femto (base station router) are being standardized by 3GPP to serve indoor wireless connectivity by small UMTS or LTE base stations in the end user's premises, using DSL lines for backhauling to the core network of the wireless operator. Such home base stations will offload traffic from the public wireless network, improve the bandwidth available indoors and avoid having to transmit to and from the outdoor cellular antenna through building walls with high path loss. However, home base stations are permanently operating, i.e. permanently providing system information to mobile phones and waiting for mobile phones to connect, which consumes a large energy load in the range of tens of Watts even if no one is currently using the home base station, for example when being 'at home' in a certain building. For a broad deployment in many or even most households, this will add an unacceptable amount of energy consumption.

In "Dynamic Setup of HNBs for Energy Savings and Interference Reduction" (3GPP Draft; R3-081949; Mitsubishi Electric) the deployment of a large number of femto cells is described. WO 20081131591 A1 discloses an private cell re selection of a UE. WO 2008/131588 A1 discloses a method for transmission mode change in a telecommunication network. In "Dynamic Setup of HNBs (3GPP draft; R3-080064; Mitsubishi Electric) the deployment of femto-base stations in homes as elements of a more global cellular network is disclosed. In "A method for interference control and power saving for home access point" (ip.com journal, 13 December 2007; ISSN: 1533-0001) the voice coverage is extended and a wireless broadband access is provided to a limited number of users using a small access point.

### Summary of the invention

The present invention provides a power management system comprising a home base station of a cellular mobile telecommunications network, wherein the home base station is operable at a first and a second power mode, wherein the power consumption of the home base station is lower in the first power mode than in the second power mode, wherein the system comprises means for detecting the presence of a mobile phone within a predetermined distance to the spatial home base station location and means for transmitting a first control signal to the home base station router upon detection of said presence of said mobile phone within the predetermined distance to the spatial home base station location. Further, the home base station is adapted to transition from the first power mode into the second power mode upon reception of said first control signal. Power up or power down of the home base station is understood as transitioning the home base station router between the first power mode and the second power mode. The home base station is further adapted to transition to the first power mode if no user device has been connected to the home base station during a predefined period of time. The home base station is further adapted to transition to the second power mode and maintain the second power mode in case an area that is covered by the home base station is not covered by outdoor cellular networks, wherein the means for detecting the presence of a mobile phone is connected to the means for transmitting the first control signal, wherein the means for detecting the presence of a mobile phone comprises a sensor element, wherein the sensor element comprises a radio frequency receiver adapted for receiving a radio frequency signal of the mobile phone and/or a radio frequency signal of a radio frequency identification RFID tag; and wherein the system is adapted to determine the spatial distance of the mobile phone to the home base station router using said spatial location information comprised in the radio frequency signal.

Embodiments of the invention have the advantage, that it is possible to provide an efficient power management for putting the home base station into a sleep mode when there is no need for usage of the home base station. For example, the home base station may be put into a sleep mode in case no one is in spatial vicinity to the home base station router. Illustratively speaking, in case the home base station router is installed in a person's home, the home base station router may be put into a sleep mode in case nobody is at home. This provides an easy and user-friendly possibility to drastically reduce the basic energy load of home base stations.

In accordance with an embodiment of the invention, the means for detecting the presence of a mobile phone comprise a sensor element. The sensor element is adapted to detect the return of at least one resident to the building or flat the home base station serves. In case the sensor element detects the return or presence of a mobile phone carried by a resident, for example power up can be done by state of the art lights out management with hibernation mode and activation by incoming packets on the network interface or user initiated service request.

In accordance with an embodiment of the invention, the sensor element comprises a motion sensor adapted for sensing a motion of the mobile phone. Either, the motion of the mobile phone itself may be sensed or the fact may be used that typically a mobile phone is carried by a human being, wherein a motion of the human being indirectly indicates the motion of the mobile phone itself. By means of such a sensor element any significant motion within the area which is served by the home base station will be automatically detected and thus be used to wake up the home base station from hibernation mode with low power consumption to normal operating mode with normal power consumption.

In accordance with an embodiment of the invention, the sensor element comprises a radio frequency receiver adapted for receiving a radio frequency signal of the mobile phone and/or a radio frequency signal of an RFID (radio frequency identification) tag. For example, the sensor element may be located close to the entrance door of the building which is served by the home base station, so that this sensor is able to detect the radio frequency transmitted by a home coming resident's cell phone. For this purpose, the sensor may be connected to the power supply of the home base station and can thus be used to activate the service of the home base station.

In case an RFID tag is used, in a preferred embodiment the RFID tag is attached to the mobile phone. In case the RFID tag comes in close vicinity to the sensor element, the sensor element will be able to detect radio waves emanated from the RFID tag and use information comprised in the radio waves to activate the service of the base station. The RFID tag can either be a passive or an active RFID tag, wherein the latter one has the advantage that no additional power supply from the mobile phone is required.

In accordance with a further embodiment of the invention, the radio frequency signal of the mobile phone comprises spatial location information of the mobile phone, wherein the system is adapted to determine the spatial distance of the mobile phone to the home base station router using said spatial location information. For example, the mobile phone may repeatedly compare tracking or routing area IDs broadcasted by the currently serving cell with a current one. If this IDs change the mobile phone provides this information by means of the radio frequency signal to the sensor. In turn, the system is able to calculate from this spatial location information the spatial distance of the mobile phone to the home base station router and thus to determine if it is necessary to transmit the first control signal to the home base station router. It is further possible to use GPS information provided by the mobile phone via the radio frequency signal to the radio frequency receiver to determine the spatial distance between the mobile phone and the home base station router.

It has to be mentioned here, that the predetermined distance may be defined in various ways. Basically, this has to measure that the mobile phone is with a predefined probability within the coverage range of the home base station router. For example it may be a direct spatial distance predetermined in meters, or it may be indirectly determined for example by a radio frequency signal path loss of less than a predetermined value, for example 90dB between the mobile phone or the RFID tag and the sensor or even by a radio frequency signal path loss of less than for example 90dB between the spatially closest mobile phone base station next to the home base station router and the mobile phone. A further example is that said distance is defined by being in or outside a set of cells in the vicinity of the home base station router.

In accordance with a further embodiment of the invention, the sensor element comprises a door opener. In other words, as soon as a door of the building which is served by the home base station is opened, the home base station is activated and goes from hibernation mode to normal operation mode.

It has to be mentioned here, that for the power down of the home base station similar detection schemes as in the various embodiments of the invention could sense when the last resident comprising a mobile phone leaves the home. However, this requires more state information, especially for rooms with more than one resident. Further it is possible to implement timers with the base station for power down. If no user device has been connected to the home base station for a predefined period of time, the home base station goes to hibernation. Further, this may make use of state of the art heartbeat signaling between the mobile phones and the home base station as it is exchanged even in idle mode of user devices.

In accordance with a further embodiment of the invention, it is possible to adapt the system to support emergency calls. In this case, the home base station shall not be allowed to go to power down in case the area which is served by the home base station is not covered by outdoor cellular networks. Therefore, one embodiment of the invention has a pre-configuration without power down and can only be configured for active power management if the user accepts a disclaimer, for example in a merchandizing contract or in an interactive menu, and thus confirms availability of sufficient wireless coverage for emergency calls.

In accordance with a further embodiment of the invention, the sensor element comprises a door opener. This has the advantage that in a very simple and cheap manner already existing door opening systems can be used to power up (or power down) the home base station. As soon as the door opener is activated, for example as soon as a certain electrical door contact is opened or closed or as the key is inserted in the lock, this will be signaled to the home base station and can thus be used as criterion for powering up or down the home base station. In this special embodiment, the sensor element may just be a simple switch. In a more advanced embodiment the door opener is triggered wirelessly (e.g. a RF garage door opener), such door opening mechanism may also be integrated in the mobile phone device.

In accordance with a further embodiment of the invention, the means for detecting the presence of the mobile phone comprise an interface, the interface being adapted for receiving a second control signal from a burglar alarm system, wherein the interface is further adapted for generating the first control signal in response to the reception of said second control signal. In other words, already existing burglar alarm systems can be used to power up or power down the home base station.

The usage of a burglar alarm system has the advantage that this already comprises a variety of different sensors which allow to detect the presence of a person within the sensing range of the burglar alarm system.

In accordance with a further embodiment of the invention, the home base station router is connected to a core network of the cellular mobile telecommunications network, wherein the means for detecting the presence of the mobile phone and the means for transmitting the first control signal to the home base station router are comprised in the core network and/or in the mobile phone. In other words, it is possible to wake up or power down the home base station indirectly via the network through which the home base station router is connected to the cellular mobile telecommunications network. For example, the home base station is connected to the core network via a broadband internet protocol (IP) based network, wherein the means for transmitting the first control signal to the home base station router are adapted to transmit said first control signal via the broadband internet protocol-based network. Such a network may either be an intranet or the internet itself, wherein for example the home base station may be connected to the core network via a DSL (digital subscriber line), wired Ethernet or fiber optic cables to the cellular mobile telecommunications network. Alternatively, it is possible that the home base station is connected to the core network via an air interface radio-based communication link, wherein the means for transmitting the first control signal to the home base station router are adapted to transmit said first control signal via said air interface radio-based communication link. For example, an air interface radio-based communication link may be any wireless radio-based communication link between the home base station router and an active base station.

For example it is possible that the cell phone itself may detect that it is being in the vicinity of the home base station. For example, in case the home base station is installed in a building comprising a door, a short-range radio beacon or an RF tag located close to the door may be detected by the cell phone. On the cell phone an application may be running that is triggered by the RF tag or the radio beacon. This application may send a wake up signal to the home base station, either directly to the IP address of the home base station on for example a DSL backhaul or to a server in the core network, which relays the wake up request in the signaling band of the control protocol between the home base station and the core network.

Alternatively it is possible that a user may actively activate its home base station by performing a user entry action on the mobile phone. It has to be noted here that mobile phone is understood as any device which can be used for communication via a home base station. Besides normal mobile phones this may also comprise personal digital assistants (PDAs).

In case a user actively clicks for example a button on a graphical user interface on the cell phone/PDA, an application running on the cell phone/PDA may send a wake up signal to the home base station - either directly to the IP address of the home base station or to said server in the core network.

In accordance with an embodiment of the invention, the means for detecting the presence of a mobile phone comprise a sensor element. This sensor element may be part of the core network, the home base station or the mobile phone itself.

In accordance with a further embodiment of the invention, the cell phone may detect its vicinity to the home cell by information like location, tracking or routing area IDs broadcast by the cells in the neighborhood of the home cell. If for example one of the broadcast IDs matches a preconfigured list of such IDs, the application running in the cell phone will send a signal to the home base station in order to wake up the home base station as described above. In this case, the sensor is part of the mobile phone, i.e. comprised in the mobile phone.

In accordance with a further embodiment of the invention, the trigger for wake up stems from location information the core network holds on the users' cell phones. When the location is within a predefined range of the user's home location, the network signals a wake up to the user's home base station. This advantageously also supports cell phones that are powered up inside the home, so a door located sensor is not necessary to detect the arrival of the cell phone. In this case, the sensor is part of the core network. The sensor is thus able to determine the spatial distance between the home base station router and the mobile phone for example from a current cell ID, an actual path loss, or a strongest pilot signal.

Also here it is further possible to use GPS information provided by the mobile phone via a radio frequency signal to the core network to determine the spatial distance between the mobile phone and the home base station router. In this case, for example the sensor itself may analyze the GPS information and calculate the spatial distance between the home base station router and the mobile phone in order to detect if the mobile phone is located within a predetermined distance to the home base station router.

In accordance with a further embodiment of the invention, not only the home base station is controlled for being woken up or powered down as described above, but further devices which are not required to being powered up when nobody is at home may be connected to the power management system and thus being powered up or powered down in accordance with the above described principles. For example, such devices may comprise DECT (digital enhanced cordless telecommunications) phones, WLAN, DSL routers, TV and hi-fi equipment, room heating or water circulation pumps.

In another aspect, the invention relates to a method of operating a power management system comprising a home base station of a cellular mobile telecommunications network, the home base station being operable at a first and a second power mode, wherein the power consumption of the home base station is lower in the first power mode than in the second power mode, wherein the method comprises detecting the presence of a mobile phone within a predetermined distance to the spatial home base station location and transmitting a first control signal to the home base station upon detection of said presence of said mobile phone within the predetermined distance to the spatial home base station location. Further, the method comprises transition ing the home base station router from the first power mode into the second power mode upon reception of said first control signal. The home base station is further adapted to transition to the first power mode if no user device has been connected to the home base station during a predefined period of time. The home base station is further adapted to transition to the second power mode and maintain the second power mode in case an area that is covered by the home base station is not covered by outdoor cellular networks, wherein the means for detecting the presence of a mobile phone is connected to the means for transmitting the first control signal, wherein the means for detecting the presence of a mobile phone comprises a sensor element, wherein the sensor element comprises a radio frequency receiver adapted for receiving a radio frequency signal of the mobile phone and/or a radio frequency signal of a radio frequency identification RFID tag; and wherein the system is adapted to determine the spatial distance of the mobile phone to the home base station router using said spatial location information comprised in the radio frequency signal.

In another aspect, the invention relates to a computer program product comprising computer executable instructions to perform the method of operating a power management system.

### Brief description of the drawings

In the following preferred embodiments of the invention will be described in greater detail by way of example only making reference to the schematic drawings in which:
- Figure 1: shows a block diagram of an architecture comprising a base station router, a core network and a mobile phone,
- Figure 2: shows a further embodiment of an architecture comprising a base station router, a core network and a mobile phone,
- Figure 3: shows a further embodiment of an architecture comprising a base station router, a core network and a mobile phone.

### Detailed description

In the following similar elements are denoted by the same reference numerals.

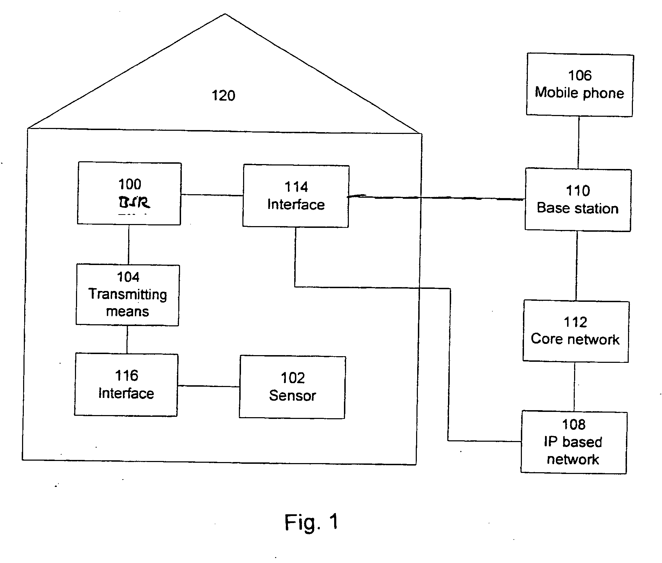

Fig. 1 shows a block diagram of an architecture of a base station router 100, a core network 112 and a mobile phone 106. The mobile phone 106 is able to communicate via a base station 110 with the core network 112. Further, the mobile phone 106 is able to communicate via the base station router with the core network. This is done by means of an interface 114 which connects the base station router 100 via an IP-based network 108 to the core network 112.

Further, illustratively in fig. 1 a building 120 is shown. The base station router 100 provides a radio coverage within the building 120. In case a person carrying the mobile phone 106 enters the building 120, in an embodiment of the invention, the sensor 102 detects the presence of this person. For example, the sensor 102 may be a door sensor or it may be a motion detector. For example, the sensor 102 may be part of a burglar alarm system, which is coupled via an interface 116 to transmitting means 104.

The transmitting means provide a control signal to the base station router 100 indicating that the sensor 102 has detected the presence of a person. In turn, the base station router i.e. the home base station100 will transition from a first power mode into a second power mode, wherein in the second power mode the power consumption of the home base station router is higher than in the first power mode. Once the base station router 100 is powered up, the mobile phone 106 can be used to place wireless phone calls via the base station router 100.

It has to be noted, that the base station router 100 can either be connected via the IP-based network 108 to the core network 112, or alternatively the router may be connected via the base station 110 in a wireless manner to the core network 112.

Not shown or discussed here is the possibility, that the mobile phone 106 may directly communicate with the base station router 100 via a further sensor which may be for example an RF receiver adapted to receive an RF signal from the mobile phone.

In the embodiment shown in fig. 1, the power management system is formed by the major components base station router 100, transmitting means 104 and sensor 102. The sensor 102 may either be part of a burglar alarm system or may be any kind of external sensor.

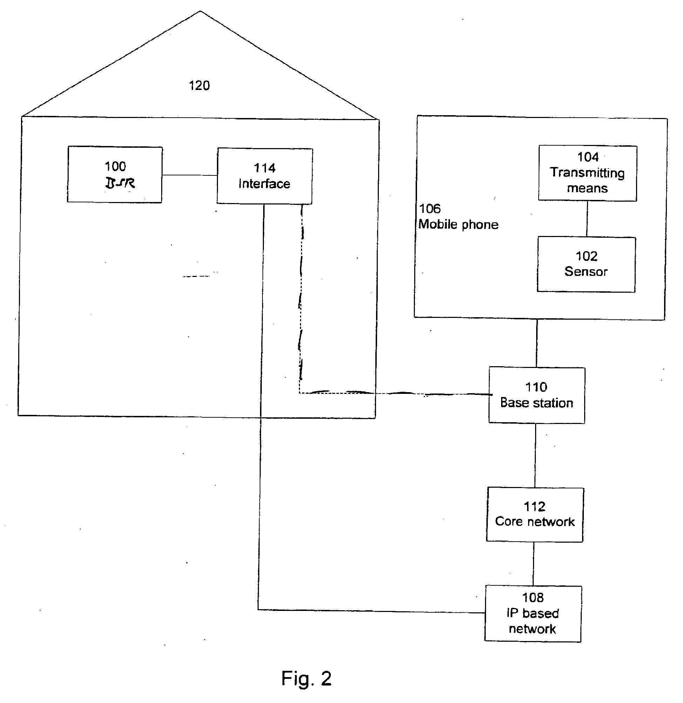

In fig. 2 the architecture of the base station router 100, the mobile phone 106 and the core network 112 is modified compared to fig. 1: compared to the embodiment shown in fig. 1, the sensor 102 of the power management system is not installed in the building 120 but the sensor 102 is now part of the mobile phone 106. For example, the sensor 102 may detect a certain radio signal, for example a short-range radio beacon or an RFID tag signal which is emanated from inside the building 120. In turn, the mobile phone 106 is aware of the fact that it is in close vicinity, i.e. within a predetermined distance to the base station router 100. In turn, transmitting means 104 provide a signal to the base station router 100 which indicates the necessity to power up the base station router 100 in order to be used for communications via the mobile phone 106 and the core network 112. The control signal transmitted by means of the transmitting means 104 to the base station router 100 may either be directly transmitted via the base station 110 to the interface 114 of the base station router 100, or in a preferred embodiment the control signal is transmitted via the base station 110 to the core network 112 which forwards the control signal via the IP-based network 108 to the interface 114.

In the embodiment shown in fig. 2, the power management system is formed by the major components base station router 100 comprised in the building 120, the transmitting means 104 comprised in the mobile phone 106 and the sensor 102 also comprised in the mobile phone 106.

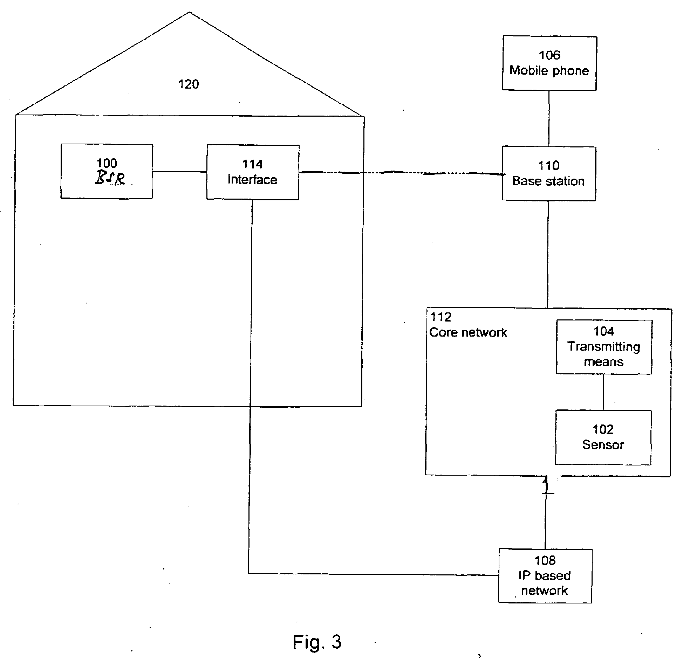

Fig. 3 illustrates a third embodiment of an architecture which comprises a base station router 100, a mobile phone 106 and a core network 112. Here, the transmitting means 104 and the sensor 102 are part of the core network 112. It has to be noted, that preferably in the embodiment shown in fig. 3 the sensor 102 has to be understood as 'means for detecting the presence of the mobile phone 106 within a predetermined distance to the spatial location of the home base station router 100'. The reason is, that in the embodiment illustrated in fig. 3 the core network 112 (the 'sensor' 102) knows the actual spatial location of the mobile phone 106. The reason is, that a turned on mobile phone is in connection with the base station 110 which spatial location is well known to the core network 112. Further, if the spatial location of the base station router 100 is known to the core network, the core network is able to determine the spatial distance between the mobile phone 106 and the base station router 100. The above mechanism already works for a single base station. However, in case a set of base stations 110 is used, this allows to more precisely determine the spatial location of the mobile phone 106.

As soon as the core network 112 detects that the mobile phone 106 is in close vicinity to the base station router 100, the transmitting means 104 are used to provide a respective wake up signal (control signal) either via the base station 110 or via the IP-based network 108 to the base station router 100.

In the embodiment shown in fig. 3, the power management system is formed by the major component base station router 100 comprised in the building 120, sensor 102 and transmitting means 104 comprised in the core network 112.

### List of reference numerals

- 100: home base station router
- 102: sensor
- 104: transmitting means
- 106: mobile phone
- 108: IP-based network
- 110: base station
- 112: core network
- 114: interface
- 116: interface
- 120: building

## Claims

1. A power management system comprising a home base station (100) of a cellular mobile telecommunications network, the home base station (100) being operable at a first and a second power mode, wherein the power consumption of the home base station (100) is lower in the first power mode than in the second power mode, the system further comprising:
- means for detecting the presence of a mobile phone (106) within a predetermined distance to the spatial home base station (100) location,
- means for transmitting a first control signal to the home base station (100) upon detection of said presence of said mobile phone (106) within a predetermined distance to the spatial home base station (100) location,
wherein the home base station (100) is adapted to transition from the first power mode into the second power mode upon reception of said first control signal,
wherein the home base station (100) is further adapted to transition to the first power mode if no user device has been connected to the home base station (100) during a predefined period of time,
wherein the home base station (100) is further adapted to transition to the second power mode and maintain the second power mode in case an area that is covered by the home base station (100) is not covered by outdoor cellular networks,
and wherein the means for detecting the presence of a mobile phone is connected to the means for transmitting the first control signal, wherein the means for detecting the presence of a mobile phone comprises a sensor element (102), wherein the sensor element comprises a radio frequency receiver adapted for receiving a radio frequency signal of the mobile phone (106) and/or a radio frequency signal of a radio frequency identification RFID tag; and
wherein the system is adapted to determine the spatial distance of the mobile phone (106) to the home base station router (100) using spatial location information comprised in the radio frequency signal.

2. The power management system of claim 1, wherein the home base station (100) is connected to a core network (112) of the cellular mobile telecommunications network, wherein the means for detecting the presence of the mobile phone (100) and the means for transmitting the first control signal to the home base station (100) are comprised in the core network (112) and/or in the mobile phone (106).

3. The power management system of claim 2, wherein
- the home base station is connected to the core network (112) via a broadband internet protocol based network (108), wherein the means for transmitting the first control signal to the home base station (100) are adapted to transmit said first control signal via the broadband internet protocol based network, wherein the broadband internet protocol based network is a digital subscriber line DSL, wired Ethernet or fiber optic cables, or
- the home base station is connected to the core network (112) via an air interface radio-based communication link, wherein the means for transmitting the first control signal to the home base station (100) are adapted to transmit said first control signal via the air interface radio-based communication link.

4. A method of operating a power management system comprising a home base station (100) of a cellular mobile telecommunications network, the home base station (100) being operable at a first and a second power mode, wherein the power consumption of the home base station (100) is lower in the first power mode than in the second power mode, the method comprising:
- detecting the presence of a mobile phone (108) within a predetermined distance to the spatial home base station (100) location,
- transmitting a first control signal to the home base station (100) upon detection of said presence of said mobile phone (106) within the predetermined distance to the spatial home base station (100) location,
wherein the home base station (100) transitions from the first power mode into the second power mode upon reception of said first control signal,
wherein the home base station (100) is further adapted to transition to the first power mode if no user device has been connected to the home base station (100) during a predefined period of time,
wherein the home base station (100) is further adapted to transition to the second power mode and maintain the second power mode in case an area that is covered by the home base station (100) is not covered by outdoor cellular networks,
and wherein the means for detecting the presence of a mobile phone is connected to the means for transmitting the first control signal, wherein the means for detecting the presence of a mobile phone comprises a sensor element (102), wherein the sensor element comprises a radio frequency receiver adapted for receiving a radio frequency signal of the mobile phone (106) and/or a radio frequency signal of a radio frequency identification RFID tag; and
wherein the system is adapted to determine the spatial distance of the mobile phone (106) to the home base station router (100) using spatial location information comprised in the radio frequency signal.

5. A computer program product comprising computer executable instructions to perform the method steps as claimed in claim 4.

## Patentansprüche

1. Energieverwaltungssystem, umfassend eine Heimbasisstation (100) eines mobilen zellularen Telekommunikationsnetzwerks, wobei die Heimbasisstation (100) in einem ersten und einem zweiten Leistungsmodus betreibbar ist, wobei die Leistungsaufnahme der Heimbasisstation (100) in dem ersten Leistungsmodus niedriger ist als in dem zweiten Leistungsmodus, wobei das System weiterhin umfasst:
- Mittel zum Erfassen der Präsenz eines Mobiltelefons (106) innerhalb einer vorbestimmten Entfernung zu dem räumlichen Standort der Heimbasisstation (100),
- Mittel zum Übertragen eines ersten Steuersignals an die Heimbasisstation (100) nach Erfassen der besagten Präsenz des besagten Mobiltelefons (106) innerhalb einer vorbestimmten Entfernung zu dem räumlichen Standort der Heimbasisstation (100),
wobei die Heimbasisstation (100) dazu ausgelegt ist, nach Empfang des besagten ersten Steuersignals von dem ersten Leistungsmodus in den zweiten Leistungsmodus überzugehen,
wobei die Heimbasisstation (100) weiterhin dazu ausgelegt ist, in den ersten Leistungsmodus überzugehen, wenn kein Benutzergerät während eines vordefinierten Zeitraums mit der Heimbasisstation (100) verbunden wurde,
wobei die Heimbasisstation (100) weiterhin dazu ausgelegt ist, in den zweiten Leistungsmodus überzugehen und den zweiten Leistungsmodus beizubehalten, wenn ein Bereich, der von der Heimbasisstation (100) abgedeckt wird, nicht von zellularen Außenbereichsnetzwerken abgedeckt wird,
und wobei das Mittel zum Erfassen der Präsenz eines Mobiltelefons an die Mittel zum Übertragen des ersten Steuersignals angeschlossen ist, wobei das Mittel zum Erfassen der Präsenz eines Mobiltelefons ein Sensorelement (102) umfasst, wobei das Sensorelement einen Funkfrequenzempfänger umfasst, welcher für den Empfang eines Funkfrequenzsignals des Mobiltelefons (106) und/oder eines Funkfrequenzsignals eines Funkfrequenzidentifikations- bzw. RFID-Tags ausgelegt ist; und
wobei das System dazu ausgelegt ist, die räumliche Entfernung des Mobiltelefons (106) zu dem Heimbasisstations-Router (100) unter Verwendung von in dem Funkfrequenzsignal enthaltenen Informationen über den räumlichen Standort zu ermitteln.

2. Energieverwaltungssystem nach Anspruch 1, wobei die Heimbasisstation (100) an ein Kernnetzwerk (112) des mobilen zellularen Telekommunikationsnetzwerks angeschlossen ist, wobei das Mittel zum Erfassen der Präsenz des Mobiltelefons (106) und die Mittel zum Übertragen des ersten Steuersignals an die Heimbasisstation (100) im Kernnetzwerk (112) und/oder in dem Mobiltelefon (106) umfasst sind.

3. Energieverwaltungssystem nach Anspruch 2, wobei
- die Heimbasisstation über ein auf einem Internet-Protokoll basierendes breitbandiges Netzwerk (108) an das Kernnetzwerk (112) angeschlossen ist, wobei die Mittel zum Übertragen des ersten Steuersignals an die Heimbasisstation (100) für die Übertragung des besagten ersten Steuersignals über das auf dem Internet-Protokoll basierende breitbandige Netzwerk ausgelegt sind, wobei das auf dem Internet-Protokoll basierende breitbandige Netzwerk aus einem digitalen Teilnehmeranschluss DSL, einem verdrahteten Ethernet oder aus faseroptischen Kabeln besteht, oder
- die Heimbasisstation über eine funkbasierte Luftschnittstellen-Kommunikationsverbindung an das Kernnetzwerk (112) angeschlossen ist, wobei die Mittel zum Übertragen des ersten Steuersignals über die funkbasierte Luftschnittstellen-Kommunikationsverbindung an die Heimbasisstation (100) ausgelegt sind.

4. Verfahren zum Betreiben eines Energieverwaltungssystem, welches eine Heimbasisstation (100) eines mobilen zellularen Telekommunikationsnetzwerks umfasst, wobei die Heimbasisstation (100) in einem ersten und einem zweiten Leistungsmodus betreibbar ist, wobei die Leistungsaufnahme der Heimbasisstation (100) in dem ersten Leistungsmodus niedriger ist als in dem zweiten Leistungsmodus, wobei das Verfahren umfasst:
- Erfassen der Präsenz eines Mobiltelefons (106) innerhalb einer vorbestimmten Entfernung zu dem räumlichen Standort der Heimbasisstation (100),
- Übertragen eines ersten Steuersignals an die Heimbasisstation (100) nach Erfassen der besagten Präsenz des besagten Mobiltelefons (106) innerhalb einer vorbestimmten Entfernung zu dem räumlichen Standort der Heimbasisstation (100),
wobei die Heimbasisstation (100) nach Empfang des besagten ersten Steuersignals von dem ersten Leistungsmodus in den zweiten Leistungsmodus übergeht,
wobei die Heimbasisstation (100) weiterhin dazu ausgelegt ist, in den ersten Leistungsmodus überzugehen, wenn kein Benutzergerät während eines vordefinierten Zeitraums mit der Heimbasisstation (100) verbunden wurde,
wobei die Heimbasisstation (100) weiterhin dazu ausgelegt ist, in den zweiten Leistungsmodus überzugehen und den zweiten Leistungsmodus beizubehalten, wenn ein Bereich, der von der Heimbasisstation (100) abgedeckt wird, nicht von zellularen Außenbereichsnetzwerken abgedeckt wird,
und wobei das Mittel zum Erfassen der Präsenz eines Mobiltelefons an die Mittel zum Übertragen des ersten Steuersignals angeschlossen ist, wobei das Mittel zum Erfassen der Präsenz eines Mobiltelefons ein Sensorelement (102) umfasst, wobei das Sensorelement einen Funkfrequenzempfänger umfasst, welcher für den Empfang eines Funkfrequenzsignals des Mobiltelefons (106) und/oder eines Funkfrequenzsignals eines Funkfrequenzidentifikations- bzw. RFID-Tags ausgelegt ist; und
wobei das System dazu ausgelegt ist, die räumliche Entfernung des Mobiltelefons (106) zu dem Heimbasisstations-Router (100) unter Verwendung von in dem Funkfrequenzsignal enthaltenen Informationen über den räumlichen Standort zu ermitteln.

5. Computerprogramm-Produkt, umfassend computerausführbare Befehle zum Durchführen der Verfahrensschritte gemäß Anspruch 4.

## Revendications

1. Système de gestion d'énergie comprenant une station de base domestique (100) d'un réseau de télécommunications mobile cellulaire, la station de base domestique (100) pouvant fonctionner à un premier et à un deuxième modes d'énergie, dans lequel la consommation d'énergie de la station de base domestique (100) est inférieure dans le premier mode d'énergie à celle dans le deuxième mode d'énergie, le système comprenant en outre :
- des moyens pour détecter la présence d'un téléphone mobile (106) dans une distance prédéterminée par rapport à la position spatiale de la station de base domestique (100),
- des moyens pour transmettre un premier signal de commande à la station de base domestique (100) lors de la détection de ladite présence dudit téléphone mobile (106) dans une distance prédéterminée par rapport à la position spatiale de la station de base domestique (100),
dans lequel la station de base domestique (100) est adaptée pour passer du premier mode d'énergie au deuxième mode d'énergie lors de la réception dudit premier signal de commande,
dans lequel la station de base domestique (100) est en outre adaptée pour passer au premier mode d'énergie si aucun dispositif utilisateur n'a été connecté à la station de base domestique (100) durant une période prédéfinie,
dans lequel la station de base domestique (100) est en outre adaptée pour passer au deuxième mode d'énergie et pour maintenir le deuxième mode d'énergie lorsqu'une zone qui est couverte par la station de base domestique (100) n'est pas couverte par des réseaux cellulaires extérieurs,
et dans lequel les moyens pour détecter la présence d'un téléphone mobile sont connectés aux moyens pour transmettre le premier signal de commande, dans lequel les moyens pour détecter la présence d'un téléphone mobile comprennent un élément de capteur (102), dans lequel l'élément de capteur comprend un récepteur de radiofréquence adapté pour recevoir un signal de radiofréquence du téléphone mobile (106) et/ou un signal de radiofréquence d'une étiquette d'identification par radiofréquence RFID ; et
dans lequel le système est adapté pour déterminer la distance spatiale du téléphone mobile (106) par rapport au routeur de station de base domestique (100) en utilisant des informations de position spatiale contenues dans le signal de radiofréquence.

2. Système de gestion d'énergie selon la revendication 1, dans lequel la station de base domestique (100) est connectée à un réseau central (112) du réseau de télécommunications mobile cellulaire, dans lequel les moyens pour détecter la présence du téléphone mobile (106) et les moyens pour transmettre le premier signal de commande à la station de base domestique (100) sont contenus dans le réseau central (112) et/ou dans le téléphone mobile (106).

3. Système de gestion d'énergie selon la revendication 2, dans lequel :
- la station de base domestique est connectée au réseau central (112) par l'intermédiaire d'un réseau à base de protocole Internet à large bande (108), dans lequel les moyens pour transmettre le premier signal de commande à la station de base domestique (100) sont adaptés pour transmettre ledit premier signal de commande par l'intermédiaire du réseau à base de protocole Internet à large bande, dans lequel le réseau à base de protocole Internet à large bande est une ligne d'abonné numérique DSL, une connexion Ethernet câblée ou des câbles de fibre optique, ou
- la station de base domestique est connectée au réseau central (112) par l'intermédiaire d'une liaison de communication à base de radio à interface hertzienne, dans lequel les moyens pour transmettre le premier signal de commande à la station de base domestique (100) sont adaptés pour transmettre ledit premier signal de commande par l'intermédiaire de la liaison de communication à base de radio à interface hertzienne.

4. Procédé de fonctionnement d'un système de gestion d'énergie comprenant une station de base domestique (100) d'un réseau de télécommunications mobile cellulaire, la station de base domestique (100) pouvant fonctionner à un premier et à un deuxième modes d'énergie, dans lequel la consommation d'énergie de la station de base domestique (100) est inférieure dans le premier mode d'énergie à celle dans le deuxième mode d'énergie, le procédé comprenant les étapes suivantes :
- détecter la présence d'un téléphone mobile (106) dans une distance prédéterminée par rapport à la position spatiale de la station de base domestique (100),
- transmettre un premier signal de commande à la station de base domestique (100) lors de la détection de ladite présence dudit téléphone mobile (106) dans la distance prédéterminée par rapport à la position spatiale de la station de base domestique (100),
dans lequel la station de base domestique (100) passe du premier mode d'énergie au deuxième mode d'énergie lors de la réception dudit premier signal de commande,
dans lequel la station de base domestique (100) est en outre adaptée pour passer au premier mode d'énergie si aucun dispositif utilisateur n'a été connecté à la station de base domestique (100) durant une période prédéfinie,
dans lequel la station de base domestique (100) est en outre adaptée pour passer au deuxième mode d'énergie et pour maintenir le deuxième mode d'énergie lorsqu'une zone qui est couverte par la station de base domestique (100) n'est pas couverte par des réseaux cellulaires extérieurs,
et dans lequel les moyens pour détecter la présence d'un téléphone mobile sont connectés aux moyens pour transmettre le premier signal de commande, dans lequel les moyens pour détecter la présence d'un téléphone mobile comprennent un élément de capteur (102), dans lequel l'élément de capteur comprend un récepteur de radiofréquence adapté pour recevoir un signal de radiofréquence du téléphone mobile (106) et/ou un signal de radiofréquence d'une étiquette d'identification par radiofréquence RFID ; et
dans lequel le système est adapté pour déterminer la distance spatiale du téléphone mobile (106) par rapport au routeur de station de base domestique (100) en utilisant des informations de position spatiale contenues dans le signal de radiofréquence.

5. Produit de programme informatique comprenant des instructions exécutables par un ordinateur pour exécuter les étapes de procédé selon la revendication 4.
